# EUROPÄISCHE PATENTSCHRIFT

(11) **EP 3 988 476 B1**
(45) Veröffentlichungstag und Bekanntmachung des Hinweises auf die Patenterteilung: **14.08.2024**
(21) Anmeldenummer: 20203948.3
(22) Anmeldetag: 26.10.2020
(51) Int. Cl.: B65G 1/02, B65G 1/04, B65G 43/00, G06Q 10/08

(54) **VERFAHREN ZUR EINLAGERUNG VON LADUNGSTRÄGERN IN EINEM REGAL**
METHOD FOR STORING LOAD CARRIERS IN A RACK
PROCÉDÉ DE STOCKAGE DES PORTEURS DE CHARGE DANS UNE ÉTAGÈRE

(43) Veröffentlichungstag der Anmeldung: 27.04.2022
(73) Patentinhaber: BITO-Lagertechnik Bittmann GmbH, 55590 Meisenheim (DE)
(72) Erfinder: BASTIAN, Peter, 55546 Fürfeld (DE)
(74) Vertreter: Richardt Patentanwälte PartG mbB

(56) Entgegenhaltungen:
- CN-A- 110 921 179
- JP-A- 2013 011 158
- JP-B2- 5 274 267
- US-A1- 2012 130 527
- US-A1- 2014 031 971
- US-A1- 2018 365 642
- US-B1- 10 086 998

## Beschreibung

Die Erfindung betrifft ein Verfahren zur Einlagerung von Ladungsträgern in einem Regal, sowie ein Regalsystem mit einem Regal zur Einlagerung von Ladungsträgern in dem Regal. Regale dienen der Einlagerung von Ladungsträgern. Beispielsweise kann es sich bei den Ladungsträgern um Paletten, Kartons, Boxen o. ä. handeln. Ein Regal ist dabei in mehrere übereinanderliegende Fächer aufgeteilt, wobei die übereinanderliegenden Fächer ein sogenanntes Feld bilden. Mehrere Felder können nebeneinander oder hintereinander ange-ordnet sein.

Bei Regalen muss sichergestellt sein, dass diese entsprechenden Stabilitätsanforderungen genügen. Die Sicherheit von Regalen ist in verschiedenen Normen geregelt. Ein Beispiel hierfür ist die DIN EN 15512 "Ortsfeste Regalsysteme aus Stahl - Verstellbare Palettenregale - Grundlagen der statischen Bemessung". Hinsichtlich des Betriebes und der Prüfung von Regalen ist es die DIN EN 15635 "Ortsfeste Regalsysteme aus Stahl - Anwendung und Wartung von Lagereinrichtungen". Die DIN EN 15620 "Ortsfeste Regal-systeme aus Stahl - verstellbare Palettenregale - Grenzabweichungen, Verformungen und Freiräume" und die DIN EN 15629 "Ortsfeste Regalsysteme aus Stahl - Spezifikation von Lagereinrichtungen" geben eine Hilfestellung bei der Planung und Beschaffung eines Regalsystems.

Darüber hinaus gibt es Anforderungen bzgl. Grenzabweichungen, Verformungen und Freiräume, welche durch Lieferanten, welche die Automation mit Regalbediengeräten und/oder Shuttle-Geräten vornehmen, vorgegeben werden.

WO2009/052891 A1 offenbart ein Verfahren zum Einlagern von Lagergutträgern in einer Lagervorrichtung.

US 2018/365642 A1 offenbart ein Verfahren zur Einlagerung von Ladungsträgern in einem Regal nach dem Oberbegriff des Anspruchs 1 und ein Regalsystem nach dem Oberbegriff des Anspruchs 12.

Der Erfindung liegt die Aufgabe zugrunde, ein Verfahren zur Einlagerung von Ladungsträgern in einem Regal, sowie ein Regalsystem mit einem Regal zur Einlagerung von Ladungsträgern in dem Regal bereitzustellen. Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Offenbart ist ein Verfahren nach Anspruch 1 zur Einlagerung von Ladungsträgern in einem Regal, wobei dem Regal bezüglich der Beladung mit Ladungsträgern eine Belastungsgrenze gemäß einer statischen Bemessung zugeordnet ist, wobei das Regal Felder mit jeweils mehreren Fächern aufweist und die Fächer jeweils ein oder mehrere Lagerplätze für Ladungsträger aufweisen, wobei das Verfahren eine Lagerplatzbestimmung umfasst. Die Lagerplatzbestimmung umfasst: Empfang einer ersten Information bezüglich der räumlichen Verteilung und jeweiligen Belastung durch etwaige Ladungsträger belegter Lagerplätze eines oder mehrerer der Fächer; Empfang einer zweiten Information bezüglich der räumlichen Lage eines oder mehrerer freier Lagerplätze des oder der Fächer; Empfang einer dritten Information bezüglich des Gewichts des einzulagernden Ladungsträgers; Bestimmung des zur Einlagerung des Ladungsträgers zu verwendenden freien Lagerplatzes des Fachs auf Basis der ersten, zweiten und dritten Information und der Belastungsgrenze, wobei die Bestimmung so erfolgt, dass bei der Einlagerung des Ladungsträgers die Belastungsgrenze nicht überschritten wird.

Es sei angemerkt, dass unter "Belastungsgrenze gemäß einer statischen Bemessung" z.B. eine Bemessung im Hinblick auf ein oder mehrere der o.g. DIN-Normen zu verstehen ist. Die Belastungsgrenze kann neben oder statt einer reinen maximal zulässigen Gewichtsbelastung auch eine maximal aus Belastung resultierende zulässige Deformation von Regalelementen umfassen. Die Belastungsgrenze kann eine Grenze des Regalsystems beschreiben, bei deren Überschreiten ein Versagen des Regalsystems droht. Möglich ist auch, dass die Belastungsgrenze eine Funktionsgrenze des Regalsystems beschreibt, bei deren Überschreitung eine Funktionalität des Regalsystems nicht mehr gewährleistet werden kann. Eine solche Funktionalität kann z.B. der ungehinderte Einlagerungsprozess von Ladungsträgern im Regal sein, der bei Überschreitung der Belastungsgrenze und einer damit einhergehenden Deformation von Regalkomponenten nicht mehr möglich ist, da aufgrund Deformationen ein definierter Einlagerungsprozess verhindert wird. Eine solche Funktionalität kann in einer Führungsfunktion von Einlagerungsmodulen (z.B. Regalshuttle, insbesondere automatische Regalbediengeräte) begründet sein, wobei diese Einlagerungsmodule unter Verwendung der Führungsfunktion des Regals relativ zum Regal bewegt werden und der Einlagerung der Ladungsträger dienen. Ein Beispiel hierfür ist ein automatisches Kleinteilelager (AKL) oder ein automatisches Paletten Lager (APL) oder ein Kanallager. Eine Funktionsbeeinträchtigung könnte aus einer Deformation der entsprechenden Führungsmittel am Regal resultieren, sodass auch hier eine definierter Einlagerungsprozess nicht mehr möglich sein könnte. Insofern könnte die Funktionsbeeinträchtigung die Leistungsfähigkeit und Verfügbarkeit des Gesamtsystems aus Regal und Bediengerät betreffen.

Der Fachmann versteht, dass das obig genannte analog auch für einen Auslagerungsprozess gilt.

Ausführungsformen könnten den Vorteil haben, dass flexibel eine Einlagerung von Ladungsträgern im Regal möglich ist, wobei die mögliche Belastung des Regals z.B. maximiert wird. Anstatt zum Beispiel pro Lagerplatz eine immerwährend selbe maximale Belastungsobergrenze bezüglich der Einlagerung von "leichten" Ladungsträgern vorzusehen, berücksichtigt das Verfahren insbesondere das Fach oder gleich mehrere insbesondere nebeneinderliegende und/oder übereinander liegende Fächer als Ganzes. Bei der Bestimmung des zur Einlagerung zu verwendenden Lagerplatzes wird die erste, zweite und dritte Information berücksichtigt. So könnte es möglich sein, dass je nach Einlagerungsposition und der räumlichen Verteilung und Belastung durch etwaige Ladungsträger belegter Lagerplätze auch zusätzlich ein Ladungsträger mit sehr hohem Gewicht eingelagert werden kann, ohne dass hierbei die Belastungsgrenze gemäß der statischen Bemessung überschritten wird. Insgesamt könnte das Verfahren eine optimierte bzw. maximierte Auslastung des Regals ermöglichen.

Nach einer Ausführungsform berücksichtigt die Bestimmung des zur Einlagerung des Ladungsträgers zu verwendenden freien Lagerplatzes nur die Belastungsgrenze jener Regalkomponenten des Faches oder der Fächer, in welches die Einlagerung vorgenommen werden soll. Dies wird nachfolgend als Variante 1 bezeichnet. Alternativ berücksichtigt die Bestimmung des zur Einlagerung des Ladungsträgers zu verwendenden freien Lagerplatzes nur die Belastungsgrenze jener Regalkomponenten des Feldes, in welches die Einlagerung vorgenommen werden soll und/oder nur die Belastungsgrenze jener Regalkomponenten der Fächer oder der Fächer, welche an das Fach oder die Fächer, in welche die Einlagerung vorgenommen werden soll, insbesondere seitlich angrenzen. Dies wird nachfolgend als Variante 2 bezeichnet.

Wird nur die Belastungsgrenze der Regalkomponenten des Faches oder der Fächer berücksichtigt (Variante 1), in welches die Einlagerung vorgenommen werden soll, könnte dies den Vorteil eines sich stark in Grenzen haltenden Aufwandes bezüglich der zur Bestimmung des Lagerplatzes notwendigen Ressourcen (zum Beispiel Speicher, Prozessorleistung) haben. Dennoch könnte in zuverlässiger Weise eine Aussage bezüglich des zur Einlagerung des Ladungsträgers zu verwendenden freien Lagerplatzes getroffen werden. Ein etwaiger Rechenaufwand, welcher weitere nicht zum Fach oder den Fächern gehörige Regalkomponenten berücksichtigt entfällt in diesem Fall.

In der Variante 2, bei welcher das gesamte Feld und/oder die Nachbarfächer berücksichtigt werden könnte die Bestimmung des zur Einlagerung des Ladungsträgers zu verwendenden freien Lagerplatzes mit einer höheren Qualität getroffen werden. Während in der obig beschriebenen ersteren Variante vorzugsweise höhere Sicherheitsmargen bezüglich der maximalen Belastbarkeit vorgesehen werden könnten, besteht in der das gesamte Feld und/oder die Nachbarfelder berücksichtigenden Variante die Möglichkeit, diese Sicherheitsmargen bezüglich einzelner Fächer zu minimieren, also lokal unter Umständen mit noch höheren Lasten zu arbeiten.

In einem praktischen Beispiel könnte in der erst beschriebenen Variante die Einlagerung eines Ladungsträgers mit sehr hohem Gewicht nicht möglich sein, da in diesem Fall zum Beispiel davon ausgegangen wird, dass die übrigen Fächer des zugehörigen Feldes alle maximal voll belegt sind. Die Einlagerung des zusätzlichen Ladungsträgers mit sehr hohem Gewicht würde also das Feld als Ganzes überlassen. Die 2. Variante hingegen berücksichtigt die reale Regalbelastung bezüglich weitaus mehr Komponenten, welche tatsächlich bei der Einlagerung des zusätzlichen Ladungsträgers mit hohem Gewicht relevant sind. Dies sind in diesem Beispiel nicht nur die Regalkomponenten des zur Einlagerung vorgesehenen Fachs, sondern auch die Regalkomponenten der weiteren Fächer des Feldes. Sind im Extremfall die übrigen Fächer des Feldes unbelegt, würde eine maximal zulässige Feldbelastung trotz der Einlagerung des zusätzlichen Ladungsträgers nicht überschritten werden, was (sofern das Fach nicht überlastet wird) die Einlagerung des zusätzlichen Ladungsträgers ermöglichen sollte.

Nach einer Ausführungsform erfolgt die Bestimmung des Lagerplatzes so, dass die Belastungsgrenze so weit wie möglich unterschritten wird oder so knapp wie möglich erreicht wird. Ersteres könnte den Vorteil haben, dass hierdurch die Gesamtbelastung des Regals minimiert wird. Dies könnte die Langlebigkeit des Regals erhöhen oder aufgrund z.B. reduzierter möglicher Verformungen im Fall der Verwendung von Führungsmitteln den Betrieb von Regalbediengeräten (z.B. Führungsschienen für Shuttle in einem Kanallager) im Regal verbessern. Die Verbesserung könnte in dem Beispiel der Regalbediengräte z.B. schnellere Fahrgeschwindigkeiten z.B. im Kanallager ermöglichen. Eine weitere Verbesserung könnte sich auch auf die unmittelbare Ein- und Auslagerungsgeschwindigkeit auswirken, welche durch das Regalbediengerät möglich ist.

Die letztere Variante (so weit wie möglich Gesamtbelastung minimieren) könnte den Vorteil haben, dass das Regal mit maximal möglicher Auslastung bestückt wird.

Nach einer Ausführungsform sind die Teile des Regals auf jene Regalkomponenten des Faches oder der Fächer beschränkt, in welches die Einlagerung vorgenommen werden soll. Alternativ umfassen die Teile des Regals jene Regalkomponenten des Feldes, in welches die Einlagerung vorgenommen werden soll und/oder umfassen die Teile des Regals jene Regalkomponenten der Fächer, welche an das Fach oder die Fächer, in welches die Einlagerung vorgenommen werden soll, insbesondere seitlich angrenzen.

Hier gilt bezüglich etwaiger Vorteile analog das obig für die Varianten 1 und 2 gesagte. Es sei angemerkt, dass insbesondere für den Fall der Verwendung von Regalbediengeräten, welche durch an den Fächern angeordneten Führungsmitteln geführt werden, die Berücksichtigung der Regalkomponenten der Nachbarfächer von besonderer Relevanz sein könnten. Im Folgenden sei ohne Beschränkung der Allgemeinheit davon ausgegangen, dass es sich bei dem Regalbediengerät um ein Shuttle handelt und dass es sich bei den Führungsmitteln um Führungsschienen handelt. Regalbediengerät und Einlagerungsmodul" sind hierbei als Synonyme zu verstehen. Die Führungsmittel könnten an Teilen des Regals wie z.B. Lastenträgern oder speziell Regaltraversen befestigt sein oder Teil der Lastenträger oder Traversen sein.

Durch die Berücksichtigung der Verformung der Nachbarfächer könnte implizit auch eine Verformung der Führungsschienen für das Shuttle berücksichtigt werden. Dies wiederum könne den Vorteil haben, dass als Funktionsgrenze eine maximal zulässige Deformation von Teilen der Fächer des Regals berücksichtigt wird, bei deren Überschreiten eine Führung des Shuttles durch die Führungsschienen nicht mehr gewährleistet werden könnte. Bei Überschreitung könne beispielsweise das Shuttle an den Führungsschienen hängen bleiben oder aufsetzen, sodass die Funktionsfähigkeit des Shuttles nicht mehr gewährleistet sein könnte. Durch die besagte Berücksichtigung der Verformung der Nachbarfächer könnte also gerade bei durch das Regal (schienen)geführten Regalbediengeräten gewährleistet werden, dass deren Funktionalität durch den Einladungsprozess nicht beeinträchtigt wird.

Nach einer Ausführungsform gibt die maximal zulässige Deformation zumindest eines an von: Mechanischen Schnittgrößen, Systemnachgiebigkeiten, Verformungen, Verdrehungen. Konkret könnte dies umfassen: Scherkraft an der Stützenanbindung des Fachs, Biegemoment an der Stützenanbindung des Fachs, Durchbiegung in der Mitte des Fachs oder an der Position des einzulagernden Ladungsträgers, Verdrehwinkel an der Stützenanbindung des Fachs, Verdrehwinkel in der Mitte des Fachs oder an der Position des einzulagernden Ladungsträgers, Verformung/Durchbiegung von Regalkomponenten von über dem oder den Fächern liegenden Fächern. Möglich ist, dass die genannten Varianten der Deformation auch Regalkomponenten von einem oder mehreren Fächern betrifft, welche über oder unter dem oder den Fächern liegen, für welche die Lagerplatzbestimmung durchgeführt wird.

Nach einer Ausführungsform handelt es sich bei dem Regal um ein Regal eines automatisierten Lagers, z.B. eines Shuttlelagers, wobei die Fächer parallel zueinander angeordnete Lastenträger, z.B. Querträger, Horizontalträger, Traversen, aufweisen, wobei die Lastenträger optional Führungsmittel für ein Regalbediengerät, z.B. ein Shuttle des Regals aufweisen, wobei die maximal zulässige Deformation eine maximal zulässige Deformation einer der Lastenträger und insbesondere der Führungsmittel umfasst.

Nach einer Ausführungsform umfasst die Bestimmung des zu verwendenden freien Lagerplatzes ferner die Bereitstellung einer Zusatzinformation bezüglich des zu verwendenden Lagerplatzes. Diese Zusatzinformation kann bei der Einlagerung in diesen Lagerplatz zu erwartende mechanische Kenngrößen bezüglich Regalkomponenten des den Lagerplatz aufweisenden Fachs optional einschließlich der daran angrenzenden Fächer umfassen, z,B. Durchbiegung, allgemein mechanische Schnittgrößen usw. Dies könnte den Vorteil haben, dass z.B. basierend auf dieser Zusatzinformation das Bewegungsverhalten, z.B. die Fahrtgeschwindigkeit des obig genannten Regalbediengerätes positionsabhängig gesteuert werden kann. Bereiche mit hoher Belastung und z.B. starker Deformation würden dann z.B. langsamer durchfahren als Bereiche welche unbelastet sind.

Nach einer Ausführungsform umfasst die Belastungsgrenze eine pauschale maximale Fachlast und/oder Feldlast für das Regal, wobei die Feldlast und Fachlast ausschließlich angibt, mit welchem Gewicht das Feld bzw. das Fach oder die Fächer maximal insgesamt belastet werden darf. Obwohl jedoch die Belastungsgrenze eine pauschale maximale Last für das Regal angibt, findet diese bei der Bestimmung des zu verwendenden Lagerplatzes in dieser pauschalen Form alleine keine Anwendung. Es wird grundsätzlich darüberhinausgehend berücksichtigt, an der welchen Positionen Ladungsträger im Fach eingelagert sind und es erfolgt grundsätzlich eine hiervon abhängige Bestimmung des zur Einlagerung zu verwendenden Lagerplatzes.

Nach einer Ausführungsform gibt die zweite Information als Hinweis, dass ein Lagerplatz frei ist, bezüglich dieses freien Lagerplatzes eine Belastung gleich Null an. Insofern könnte Flexibilität bestehen, wie die zweite Information einen Lagerplatz als "frei" angibt. Statt einer Markierung mit dem expliziten Hinweis "frei" könnte also auch eine Belastungsangabe "NULL" genügen.

Nach einer Ausführungsform sind die Belastung der durch etwaige Ladungsträger belegten Lagerplätze und das Gewicht des einzulagernden Ladungsträgers jeweils einer Gewichtskategorie eines Satzes von Gewichtskategorien zugeordnet, wobei die erste und dritte Information die Gewichtskategorie angibt und die Bestimmung des Lagerplatzes auf Basis der Gewichtskategorien erfolgt.

Dies könnte den Vorteil haben, dass der Ressourcenaufwand zur Bestimmung des zuwendenden Lagerplatzes minimiert wird. In einem Beispiel könnte eine Beschränkung auf lediglich zwei Gewichtskategorien genügen, zum Beispiel Ladungsträger Typ A mit Gewicht kleiner gleich Maximalgewicht 1 und Ladungsträger Typ B schwerer als Maximalgewicht 1 und leichter als Maximalgewicht 2. Anschließend könnte für verschiedene Einlagerungspositionen pro Fach insbesondere mit sehr beschränktem Aufwand definiert werden, welche Ladungsträger welcher Kombinationen von Gewichtskategorien dort eingelagert werden dürfen. Diese Variante könnte sich insbesondere für eine noch weiter unten nachfolgend beschriebene Ausführungsform eignen, bei welcher die Bestimmung des Lagerplatzes unter Verwendung eines vorbestimmten Graphen oder einer vorbestimmten Tabelle erfolgt. Durch die Verwendung der Gewichtskategorien könnte damit der Umfang der Graphen bzw. der Tabellen reduziert werden.

Nach einer Ausführungsform gibt im Falle dessen bei einer etwaigen Einlagerung des Ladungsträgers für das Fach oder die Fächer bei jedem freien Lagerplatz eine Überschreitung der Belastungsgrenze resultieren würde die Bestimmung des zur Einlagerung des Ladungsträgers zu verwendenden freien Lagerplatzes an, dass kein Lagerplatz zur Einlagerung zu verwenden ist. Dies könnte den Vorteil haben, dass eine Situation vermieden wird, welche zu einer Überlast des Regals führen würde.

Im Fall dessen bezüglich des Fachs oder der Fächer die Bestimmung des zur Einlagerung des Ladungsträgers zu verwendenden freien Lagerplatzes angibt, dass kein Lagerplatz zur Einlagerung zu verwenden ist, kann das Verfahren ferner die Auswahl eines weiteren des oder der Fächer oder eines weiteren Feldes des Regals umfassen, wobei daraufhin für das oder die weiteren der Fächer oder des weiteren Feldes und der dortigen Fächer und Lagerplätze die Lagerplatzbestimmung entsprechend durchgeführt wird.

Dies könnte dabei helfen, die Auslastung des Regals in flexibler Weise zu maximieren. Das Verfahren könnte so lange nach einem geeigneten Lagerplatz suchen, bis dieser gefunden ist. Ausgehend von einem einzelnen Fach könnte somit die Suche auf das gesamte Regal oder einen vordefinierten begrenzten Bereich, zum Beispiel maximal N vom ursprünglichen Fach beabstandete Fächer oder Felder, ausgedehnt werden.

Erfindungsgemäß erfolgt die Bestimmung des Lagerplatzes durch eine Steuereinheit, wobei die Steuereinheit für die Fächer über eine Vielzahl von Zuordnungen verfügt, wobei für jede Zuordnung angegeben ist, welcher freie Lagerplatz der Fächer zur Einlagerung von Ladungsträger verwendbar ist in Abhängigkeit von einer Informationskombination, wobei jede Informationskombination eine individuelle Kombinationsvariante von räumlichen Verteilungen und Belastungen durch Ladungsträger belegter Lagerplätze, der räumlichen Lage eines oder mehrerer freier Lagerplätze der Fächer und Gewichten von einzulagerndem Ladungsträger umfasst, wobei zur Bestimmung des Lagerplatzes die erste, zweite und dritte Information als eine aktuelle Informationskombination an die Steuereinheit übermittelt wird und wobei als Antwort auf das Übermitteln anhand der Zuordnungen der zu dieser aktuellen Informationskombination zugeordnete und zur Einlagerung zu verwendende freie Lagerplatz durch die Steuereinheit bestimmt wird.

Z.B. sind die Vielzahl der Zuordnungen durch einen Graphen oder eine Tabelle abgebildet.

Dies könnte den Vorteil haben, dass eine unter Umständen aufwändige analytische Berechnung des zu verwendenden Lagerplatzes entfällt. Zum Beispiel könnte auf einem leistungsfähigen Computer vorab die Vielzahl von Zuordnungen berechnet werden und der Steuereinheit als vorbereiteten Satz von Zuordnungen bereitgestellt werden. Bezüglich der Steuereinheit ist dann eine hohe Rechenkapazität nicht mehr notwendig. Es genügt ein einfacher "Lookup" in dem Satz der Zuordnungen um festzustellen, welche der Zuordnungen für die Informationskombination der aktuell vorliegenden ersten, zweiten und dritten Information einschlägig ist.

In einem weiteren Aspekt betrifft die Erfindung ein Regalsystem nach Anspruch 12 mit einem Regal zur Einlagerung von Ladungsträgern in dem Regal, wobei dem Regal bezüglich der Beladung mit Ladungsträger eine Belastungsgrenze gemäß einer statischen Bemessung zugeordnet ist, wobei das Regal Felder mit jeweils mehreren Fächern aufweist und die Fächer jeweils ein oder mehrere Lagerplätze für Ladungsträger aufweisen, wobei das Regalsystem eine Steuereinheit aufweist, wobei die Steuereinheit zur Durchführung einer Lagerplatzbestimmung ausgebildet ist, wobei die Lagerplatzbestimmung umfasst: Empfang einer ersten Information bezüglich der räumlichen Verteilung und jeweiligen Belastung durch etwaige Ladungsträger belegter Lagerplätze eines oder mehrerer Fächer; Empfang einer zweiten Information bezüglich der räumlichen Lage eines oder mehrerer freier Lagerplätze des oder der Fächer; Empfang einer dritten Information bezüglich des Gewichts des einzulagernden Ladungsträgers; Bestimmung des zur Einlagerung des Ladungsträgers zu verwendenden freien Lagerplatzes des Fachs auf Basis der ersten, zweiten und dritten Information und der Belastungsgrenze, wobei die Bestimmung so erfolgt, dass bei der Einlagerung des Ladungsträgers die Belastungsgrenze nicht überschritten wird.

Im Folgenden werden bevorzugte Ausführungsformen der Erfindung anhand der Zeichnungen näher erläutert. Es zeigen:
Figur 1 ein Regal,
Figur 2 eine Querschnittsansicht eines Regals,
Figur 3 ein Vergleich zweier Regale mit unterschiedlichen zulässigen Lasten,
Figur 4 ein Regal mit Steuereinheit als Regalsystem,
Figur 5 ein Flussdiagramm eines Verfahrens zur Einlagerung von Ladungsträgern in ein Regal,
Figur 6 eine Tabelle mit Informationskombinationen.

Im Folgenden werden einander ähnliche Elemente mit den gleichen Bezugszeichen gekennzeichnet.

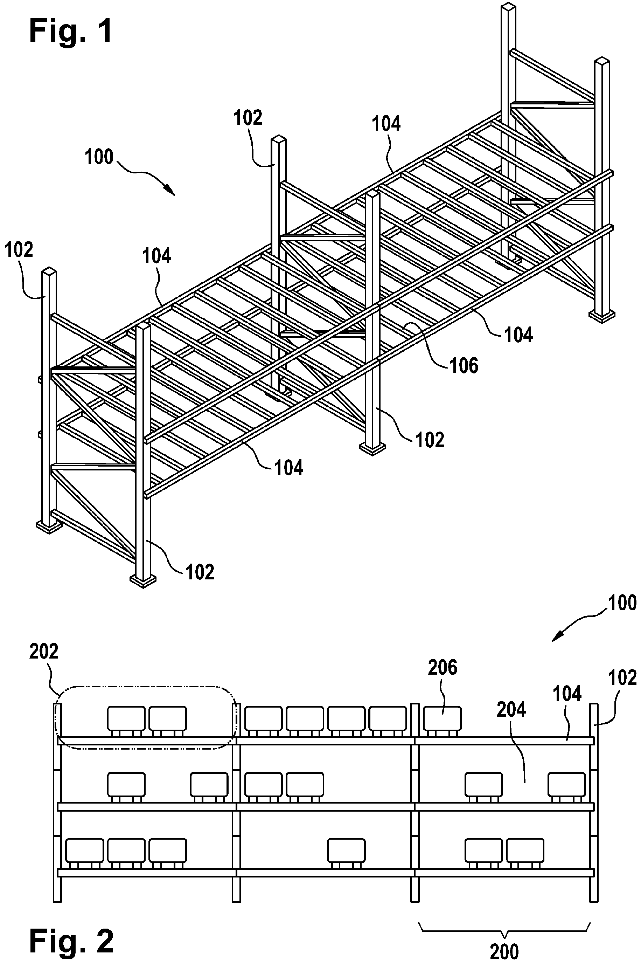

Die Figur 1 zeigt ein Regal 100 mit in Regallängsrichtung verlaufenden Lastenträgern, z.B. Querträgern, Horizontalträgern oder Traversen 104. Im Folgenden wird ohne Beschränkung der Allgemeinheit und der Einfachheit halber von "Traversen" 104 gesprochen. Die Traversen sind über bekannte Befestigungsmittel bzw. Befestigungsarten an entsprechenden Verstrebungen 102 des Regals 100 befestigt.

Die Traversen 104 sind optional über Regalpaneele 106 miteinander verbunden. Einander jeweils gegenüberliegende Traversen 104 werden jeweils z.B. durch mehrere senkrecht dazu angeordnete Regalpaneele 106 miteinander verbunden. Die Oberseite der Traversen und/oder der Regalpaneele 106 bildet eine Lagerebene zur Lagerung von Ladungsträgern, also Lagerplätze.

Figur 2 zeigt eine Querschnittsansicht eines Regals 100. Das Regal weist mehrere übereinander befindliche Ebenen auf. In den Ebenen befinden sich eingelagert verschiedene Ladungsträger 206. Außerdem gibt es bezüglich des Regals 100 mehrere freie Lagerplätze 204. Der Bereich 202 zwischen 2 Regalstützen wird bezüglich einer Ebene als Fach 202 bezeichnet. Mehrere übereinander angeordnete Fächer 202 bilden ein sogenanntes Feld 200.

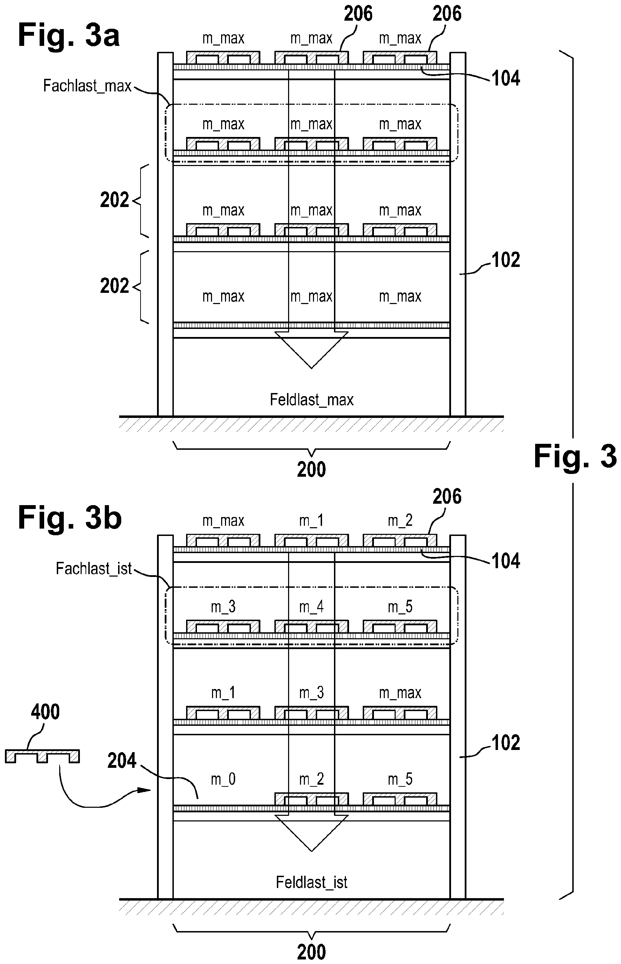

Figur 3 illustriert einen Vergleich zweier Regale mit unterschiedlich definierten zulässigen Lasten. In Figur 3a ist das Regal so ausgelegt, dass davon ausgegangen wird, dass sich an jedem Lagerplatz in allen Fächern des Feldes 200 jeweils ein Ladungsträger mit einer Last m_max befindet. Insofern ergibt sich hieraus eine Auslegung des Regals bezüglich der Beladung mit Ladungsträgern 206 mit einer Belastungsgrenze gemäß einer statischen Bemessung, welche nebst m_max pro Lagerplatz eine maximale Fachlast (z.B. 3x m_max) und eine maximale Feldlast (z.B. 4x maximale Fachlast) definiert. Die Vorgaben der Belastungsgrenzen gemäß Figur 3a würde es nicht zulassen, zum Beispiel im untersten leeren Fach 202 einen einzelnen Ladungsträger einzulagern, dessen Last über der maximal zulässigen Last m_max aber weit unterhalb der maximalen Fachlast liegt.

In der Figur 3b hingegen erfolgt eine Gesamtbetrachtung entweder pro Fach oder gar bezüglich des gesamten Feldes 200. Bei dieser Gesamtbetrachtung wird die räumliche Ist-Verteilung und jeweilige Belastung der durch die Ladungsträger 206 belegten Lagerplätze, die räumliche Lage des freien Lagerplatzes 204 und das Gewicht des einzulagernden Ladungsträgers 400 berücksichtigt.

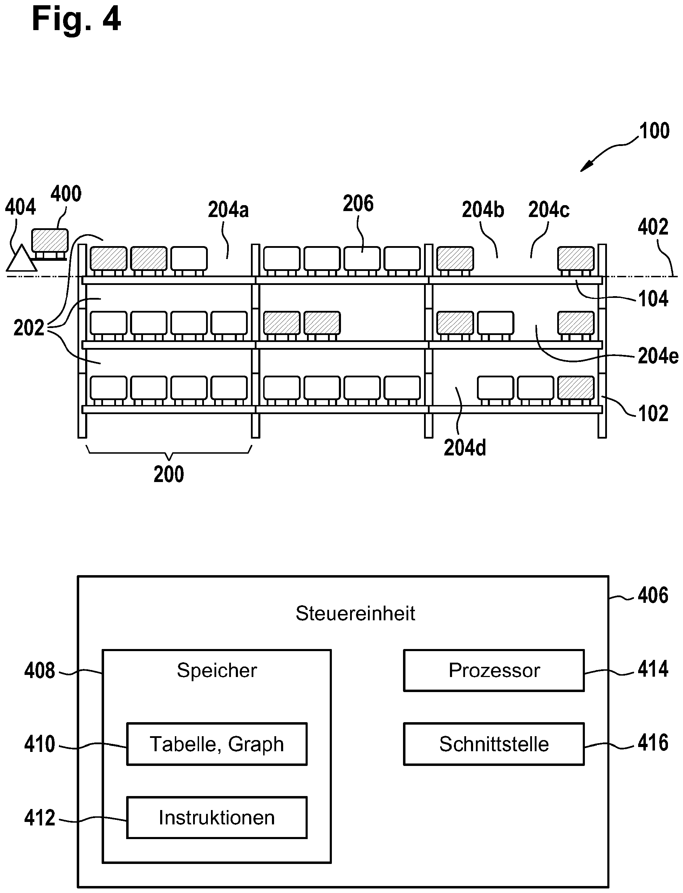

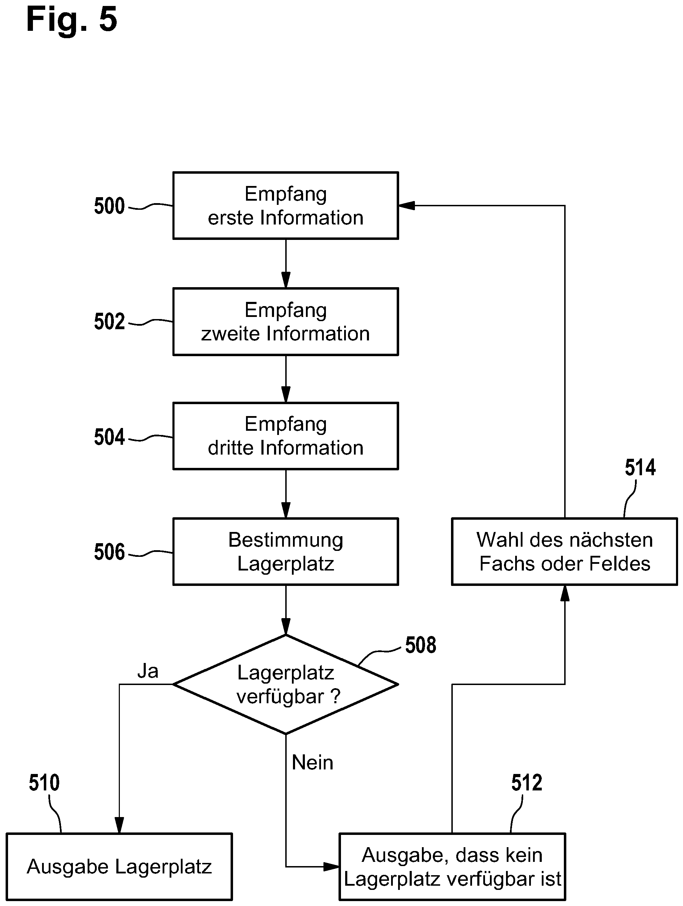

Ein praktisches Beispiel eines solchen Verfahrens zur Einlagerung von Ladungsträgern in einem Regal analog zu Figur 3b wird im Folgenden mit Bezug auf Figur 4 in Verbindung mit dem Flussdiagramm der Figur 5 illustriert. Figur 4 zeigt ein Regal 100 mit mehreren nebeneinander angeordneten Feldern 200, welche jeweils verschiedene Fächer 202 zur Einlagerung von Ladungsträgern aufweisen. Dem Regal ist eine Steuereinheit 406 zugeordnet. Die Steuereinheit kann Teil des Regals sein, sodass das Regal 100 und die Steuereinheit 406 ein Regalsystem bilden. Oder die Steuereinheit kann z.B. eine Cloudkomponente sein.

Die Steuereinheit verfügt z.B. über einen Speicher 408 mit einer Tabelle oder einem Graphen 410 und Instruktionen 412. Die Instruktionen können durch den Prozessor 414 der Steuereinheit ausgeführt werden. Die Ausführung der Instruktionen 412 durch den Prozessor 414 veranlasst die Steuereinheit 406 zur z.B. Übertragung von Steuerbefehlen an das Regalbediengerät 404. Ebenfalls über die Schnittstelle 416 der Steuereinheit 406 können Informationen bezüglich der räumlichen Verteilung und jeweiligen Belastung durch etwaige Ladungsträger 206 belegter Lagerplätze des Regals 100 empfangen werden. Selbiges gilt bezüglich des Empfangs einer Information bezüglich der räumlichen Lage einer oder mehrerer freier Lagerplätze 204 (bzw. in Figur 4 der freien Lagerplätze 204a-204d). Über die Schnittstelle 416 kann die Steuereinheit eine Information bezüglich des Gewichts des einzulagernden Ladungsträgers 400 empfangen. Die Instruktionen 412 können der Lagerplatzbestimmung für den einzulagernden Ladungsträger 400 dienen.

Die räumliche Verteilung und Belastung durch etwaige Ladungsträger belegter Lagerplätze kann die Steuereinheit zum Beispiel mittels in das Regal 100 integrierter Sensoren oder allgemein von einer externen Instanz über die Schnittstelle 416empfangen. Selbiges gilt bezüglich der Informationen bezüglich der räumlichen Lage der freien Lagerplätze. Das Regalbediengerät 404 kann ebenfalls über einen Sensor verfügen, über welchen das Gewicht des einzulagernden Ladungsträgers 400 ermittelt wird.

Eine weitere Möglichkeit, die Informationen bezüglich der räumlichen Verteilung und Belastung durch etwaige Ladungsträger belegte Lagerplätze und der freien Lagerplätze zu erhalten liegt vorzugsweise darin, dass die Steuereinheit 406 Kenntnis über alle zuvor erfolgten Ein- und Auslagerungsvorgänge verfügt. Insofern könnte der Speicher 408 auch dazu dienen, dass sich die Steuereinheit "merkt", an welcher Position welches Gewicht bzw. welche Gewichtskategorie eingelagert wurde. Damit verfügt die Steuereinheit 406 über ein vollständiges Bild bezüglich der Belegung des Regals 100 mit Ladungsträger einschließlich der Informationen bezüglich der jeweiligen Belastung der Einlagerungspositionen durch eingelagerte Ladungsträger.

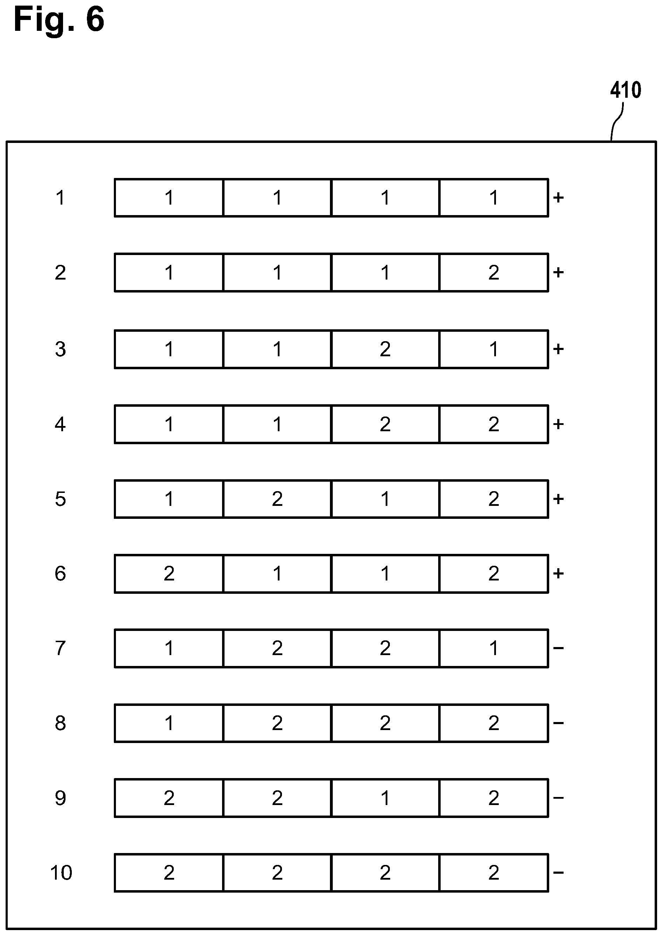

Die Bestimmung des zur Einlagerung des Ladungsträgers 400 zu verwendenden Lagerplatzes im Regal 100 erfolgt entweder auf Basis der Tabelle 410 (das gilt analog für die Verwendung eines Graphen 410) oder in einer vorliegend nicht beanspruchten Alternative auf Basis eines Berechnungsprogramms. Letzteres kann in den Instruktionen 412 enthalten sein. Ein Beispiel einerTabelle ist in Figur 6 gezeigt.

Der Einfachheit halber berücksichtigt diese Tabelle 412 lediglich Ladungsträger in einem einzelnen Fach, ohne neben diesem Fach etwaig befindliche weitere Fächer und weitere Fächer des Feldes dieses Faches zu berücksichtigen. Möglich wäre darüberhinausgehend, dass z.B. nur für ein einzelnes Fach die dortigen Einlagerungsmöglichkeiten bestimmt werden, jedoch zusätzlich der Einfluss der Belastung des Regals bzw. des Fachs durch die Nachbarfächer (links, rechts, hinten, vorne, oben und/oder unten) berücksichtigt wird. Alternativ oder zusätzlich hierzu wäre es möglich, dass "parallel" mehrere Fächer gleichzeitig betrachtet werden und die Lagerplatzbestimmung für die mehreren Fächer durchgeführt wird - das Ergebnis wäre ein Lagerplatz von einem der mehreren Fächer, z.B. der Lagerplatz, welcher bezüglich der betrachteten Fächer die z.B. geringste Regalbelastung oder Fachbelastung bewirkt.

Exemplarisch geht Figur 6 davon aus, dass Ladungsträger in Gewichtskategorien eingeteilt sind, nämlich in Kategorie 1 und Kategorie 2.Kategorie 1 entspräche beispielsweise einem Gewicht kleiner gleich 35 kg und Kategorie 2 entspräche einem Gewicht größer 35 kg bis maximal 50 kg. Außerdem ist in der Tabelle für jede der gezeigten Kombinationen der Gewichtskategorien der Ladungsträger am Ende der jeweiligen Tabellenzeile in Form eines Plus (+) oder Minus (-) angegeben, ob diese Kombination der Gewichtskategorien zulässig ist oder nicht.

In der Figur 4 sind Ladungsträger mit einem Gewicht der Kategorie 1 unschraffiert und Ladungsträger mit einem Gewicht der Kategorie 2 schraffiert angegeben. Soll beispielsweise der Ladungsträger 400 der Kategorie 2 durch das Regalbediengerät 404 im rechten Feld 200, unteres Fach 202 eingelagert werden, ergibt sich hier als Einlagerungsposition die Position 204d.

In Schritt 500 empfängt die Steuereinheit eine erste Informationen bezüglich der räumlichen Verteilung und jeweiligen Belastung durch die Ladungsträger 206 belegten Lagerplätze zum Beispiel im oberen Fach 202 des linken Feldes 200. Die erste Information besagt zum Beispiel, dass die zwei linken der bereits eingeladen Ladungsträger der Gewichtskategorie 2 sprechen und der daneben befindliche Ladungsträger der Gewichtskategorie 1 entspricht. Außerdem empfängt die Steuereinheit 406 in Schritt 502 als zweite Information, dass der rechte Lagerplatz 204a unbelegt ist. Als dritte Information empfängt die Steuereinheit 406 in Schritt 504 die Information, dass der einzulagernden Ladungsträger 400 der Kategorie 2 zugehörig ist. Wie bereits erwähnt kann der Empfang von Sensoren des Regals 100 über die Schnittstelle 416 erfolgen, oder der Empfang erfolgt vom Speicher 408, in welchem diese Informationen aus früheren Einlagerungsvorgängen hinterlegt sind.

Daraufhin erfolgt in Schritt 506 die Bestimmung des zur Einlagerung des Ladungsträgers 400 zu verwendenden freien Lagerplatzes des Fachs auf Basis der erhaltenen Informationen, sowie einer Belastungsgrenze, welche dem Regal gemäß einer statischen Bemessung zugeordnet ist. Diese Belastungsgrenze gibt an, wie stark das Regal bzw. im vorliegenden Fall wie stark das Fach 202 belastet werden darf. Die Bestimmung des zu verwendenden Lagerplatzes dem 506 berücksichtigt diese Belastungsgrenze, sorgt also dafür, dass diese nicht überschritten wird. Die Tabelle 410 der Figur wurde zuvor berechnet und erstellt und berücksichtigt genau dieses Kriterium, dass die Belastungsgrenze nicht überschritten wird.

In dem Beispiel der Verwendung der Tabelle 410 kann die Steuereinheit 406 prüfen, ob zum Beispiel eine Kombination von Ladungsträgern mit den Gewichtskategorien in der Reihenfolge 2,2,1,2 zulässig ist. Nachweislich der Zeile 9 der Tabelle der Figur 6 ist eine solche Kombination "Informationskombination" von Ladungsträgern im Fach nicht zulässig, würde also zu einer Überlastung und damit Nichteinhaltung der Belastungsgrenze des Fachs führen. Im Ergebnis ergibt die Überprüfung in Schritt 508, dass kein Lagerplatz verfügbar ist. Dem folgt eine optionale entsprechende Ausgabe in Schritt 512, dass kein Lagerplatz verfügbar ist. Letzteres wäre z.B. hilfreich, wenn es sich bei dem Regalbediengerät 404 um ein manuell durch eine Person bedientes Gerät wie einen Stapler handelt. Der "Staplerfahrer" ist nun darüber informiert, dass er den Ladungsträger 400 an der Position 204a nicht einlagern darf.

Das Verfahren setzt sich daraufhin zum Beispiel insbesondere im Fall einer Vollautomatisierung des Regalsystems (Regal 100 und automatisches Regalbediengerät 404) in Schritt 514 mit der Wahl des nächsten Fachs oder Feldes fort. Wird beispielsweise im linken Feld 200 Schritt für Schritt von oben nach unten schreitend jedes Fach bezüglich der Lagerplatzbestimmung geprüft, so wird die jeweilige zweite Information angeben, dass kein Lagerplatz verfügbar ist. In dieser Variante würde sich die Suche nach dem verfügbaren Fach daraufhin auf das mittlere Feld 200 konzentrieren. Ebenfalls von oben nach unten schreitend würde sich bezüglich des mittleren Fachs des mittleren Feldes ergeben, dass eine Einlagerung gemäß Tabelle 410 Zeile 7 und Zeile 9 nicht zulässig ist (Kombination 2,2,1,2 bzw. 2,2,2,1).

An dieser Stelle sei angemerkt, dass in dem Beispiel der Tabelle der Figur 6 auch unbelegte Fächer der Gewichtskategorie 1 zugeordnet sind. Selbstverständlich ließ sich hier noch eine weitere Gewichtskategorie 0 für unbelegte Fächer hinzufügen, was die Granularität der Bestimmung des zu verwendenden freien Lagerplatzes weiter erhöhen würde. Dementsprechend würde sich die Tabelle der Figur 6 erweitern. Ebenso ist es denkbar, der Tabelle der Figur 6 weitere Kriterien hinzuzufügen. Zum Beispiel ist denkbar, dass zusätzlich berücksichtigt wird, ob ein Gesamtgewicht der tatsächlich im Fach eingelagerten Ladungsträger optional einschließlich des einzulagernden Ladungsträgers einen bestimmten Maximalwert überschreitet oder nicht. In dieser Variante könnte sogar geprüft werden, ob ein Ladungsträger der schwerer ist als die genannten 50kg (weder Kategorie 0 noch 1 noch 2) eingelagert werden könnte, wenn der besagte Maximalwert unterschritten bleibt.

Zurückkommend auf das Regal 100 der Figur 4 wird bezüglich des mittleren Feldes 200 das Ergebnis sein, dass eine Einlagerung dort nicht möglich ist. Dasselbe ergibt sich bezüglich der Lagerplätze 200b und 204c des rechten Feldes (oberes Fach). Die Kombinationen 2,1,2,2 und 2,2,1,2 sind gemäß Zeile 9 nicht zulässig. In diesem Fall davon ausgegangen, dass die Zeilen jeweils symmetrisch betrachtet werden müssen. Zeile 2 entspräche also sowohl einer Kombination 1,1,1,2 auch 2,1,1,1.

Auch bezüglich des freien Lagerplatzes 204e ergibt sich kein anderes Ergebnis. Bezüglich Lagerplatz 204d ergibt die Bestimmung im Schnitt 506, dass eine Kombination 2,1,1,2 gemäß Zeile 6 der Tabelle 410 zulässig ist. Insofern ergibt Schritt 508, dass ein Lagerplatz verfügbar ist und dieser Lagerplatz wird an das Regalbediengerät 404 ausgegeben. Das Regalbediengerät 404 lagert daraufhin den Ladungsträger 400 in das Fach mit dem Lagerplatz 204d ein.

Figur 4 zeigt neben dem Regalbediengerät 404 auch ein Führungsmittel wie z.B. eine Führungsschiene 402, entlang welchem das Regalbediengerät 404 geführt bewegt werden kann. Wird in einer komplexeren Variante der Bestimmung des Lagerplatzes in Schnitt 506 nicht nur das jeweils aktuelle Fach betrachtet, sondern auch etwaige neben diesem Fach befindliche weitere Fächer und deren Belastung, so könnte dies den Vorteil haben, dass eine Verformung des Regals bzw. der an dem Regal montierten Führungsschiene bei der Bestimmung des zu verwenden Lagerplatzes Berücksichtigung findet. Möglich ist zum Beispiel, dass die Führungsschiene an Traversen 104 des Regals 100 (siehe Figur 1) befestigt ist, sodass eine gewichtsbedingte Deformation der Traversen 104 auch zu einer entsprechenden Deformation Führungsschiene 402 führen könnte. Dies könnte die Führungsfunktion des Regalbediengeräts negativ beeinflussen.

Anstatt der Verwendung einer Tabelle kann, wie bereits erwähnt, in einer vorliegend nicht beanspruchten Alternative eine Berechnung stattfinden, welcher Lagerplatz zur Einlagerung des Ladungsträgers 400 verwendet werden soll. Die Bestimmung erfolgt z.B. dahingehend, dass (bei jedem Einlagerungsvorgang) die Ist-Beladung des Fachs, bzw. Regals bekannt ist (analog zur Verwendung der Tabelle, siehe oben) und gegenüber einer zulässigen Beladung geprüft wird, ob das einzulagernde Ladungsträgergewicht an der jeweiligen Position noch eingelagert werden kann. Die zulässige Beladung wird z.B. für eine gleichmäßig verteilte Last und mit einer "fiktiven" max_fiktiv bzw. "mittleren" Ladungsträgerlast festgelegt. Für diese Auslegung können verschiedene relevante mechanische Kenngrößen des Faches ermittelt und als "Grenzwerte" und Belastungsgrenze dokumentiert werden. Z.B. Scherkraft, Biegemoment an der Stützenanbindung, Max. Durchbiegung in der Mitte des Fachs, Max. Verdrehwinkel an der Stützenanbindung und in der Mitte des Fachs.

Die "Fachstruktur" wird z.B. über ein Gleichungssystem als Biegeträger mit entsprechenden mechanischen Eigenschaften abgebildet. Wenn der Ladungsträger 400 eingelagert werden soll, dann wird in Schritt 506 z.B. unter Verwendung eines in den Instruktionen 412 enthaltenen Algorithmus pro Fach die in diesem Fach befindlichen Ladungsträgerlasten und Positionen um den einzulagernden Ladungsträger ergänzt und die resultierenden mechanischen Kenngrößen gegen die "Grenzwerte" verifiziert. Sind die resultierenden mechanischen Kenngrößen kleiner als die jeweiligen Grenzwerte kann der Ladungsträger eingelagert werden.

### Bezugszeichenliste

100 Regal
102 Regalstütze
104 Traverse
106 Regalpaneel
200 Feld
202 Fach
204 Lagerplatz
206 eingelagerter Ladungsträger
400 einzulagernder Ladungsträger
402 Führungsschiene
404 Regalbediengerät
406 Steuereinheit
408 Speicher
410 Tabelle, Graph
412 Instruktionen
414 Prozessor
416 Schnittstelle

## Patentansprüche

1. Verfahren zur Einlagerung von Ladungsträgern in einem Regal (100), wobei dem Regal (100) bezüglich der Beladung mit Ladungsträgern eine Belastungsgrenze gemäß einer statischen Bemessung zugeordnet ist, wobei das Regal (100) Felder (200) mit jeweils mehreren Fächern (202) aufweist und die Fächer (202) jeweils mehrere Lagerplätze (204) für Ladungsträger (206) aufweisen, wobei das Verfahren eine Lagerplatzbestimmung umfasst, wobei zur Durchführung der Lagerplatzbestimmung eine Steuereinheit (406) dient, wobei die Lagerplatzbestimmung umfasst:
- Empfang einer ersten Information bezüglich der räumlichen Verteilung und jeweiligen Belastung durch etwaige Ladungsträger (206) belegter Lagerplätze (204) eines oder mehrerer der Fächer,
- Empfang einer zweiten Information bezüglich der räumlichen Lage eines oder mehrerer freier Lagerplätze (204) des oder der Fächer (202),
- Empfang einer dritten Information bezüglich des Gewichts des einzulagernden Ladungsträgers (400),
- Bestimmung des zur Einlagerung des Ladungsträgers (400) zu verwendenden freien Lagerplatzes (204) des oder der Fächer (202) auf Basis der ersten, zweiten und dritten Information und der Belastungsgrenze, wobei die Bestimmung so erfolgt, dass bei der Einlagerung des Ladungsträgers (400) die Belastungsgrenze nicht überschritten wird,
**dadurch gekennzeichnet, dass**
die Steuereinheit (406) für die Fächer (202) über eine Vielzahl von Zuordnungen verfügt, wobei für jede Zuordnung angegeben ist, welcher freie Lagerplatz (204) der Fächer (202) zur Einlagerung von Ladungsträgern (400) verwendbar ist in Abhängigkeit von einer Informationskombination, wobei jede Informationskombination eine individuelle Kombinationsvariante von räumlichen Verteilungen und Belastungen durch Ladungsträger (206) belegter Lagerplätze (204), der räumlichen Lage eines oder mehrerer freier Lagerplätze (204) der Fächer (202) und Gewichten von einzulagerndem Ladungsträger (206) umfasst, wobei zur Bestimmung des Lagerplatzes (204) die erste, zweite und dritte Information als eine aktuelle Informationskombination an die Steuereinheit (406) übermittelt wird und wobei als Antwort auf das Übermitteln anhand der Zuordnungen der zu dieser aktuellen Informationskombination zugeordnete und zur Einlagerung zu verwendende freie Lagerplatz (204) durch die Steuereinheit (406) bestimmt wird.

2. Verfahren nach Anspruch 1, wobei die Bestimmung des Lagerplatzes (204) so erfolgt, dass die Belastungsgrenze so weit wie möglich unterschritten wird oder so knapp wie möglich erreicht wird.

3. Verfahren nach einem der vorigen Ansprüche, wobei die Bestimmung des zur Einlagerung des Ladungsträgers (400) zu verwendenden freien Lagerplatzes (204)
- nur die Belastungsgrenze jener Regalkomponenten des oder der Fächer (202) berücksichtigt, in welche die Einlagerung vorgenommen werden soll oder
- nur die Belastungsgrenze jener Regalkomponenten des Feldes (200) berücksichtigt, in welches die Einlagerung vorgenommen werden soll und/oder nur die Belastungsgrenze jener Regalkomponenten der Fächer (202) berücksichtigt, welche an das oder die Fächer (202), in welche die Einlagerung vorgenommen werden soll, insbesondere seitlich angrenzen.

4. Verfahren nach einem der vorigen Ansprüche, wobei die Bestimmung des Lagerplatzes (204) etwaige bei der Einlagerung des Ladungsträgers (400) auftretende Deformationen von Teilen des Regals (100) berücksichtigt, wobei die Belastungsgrenze eine maximal zulässige Deformation der Teile angibt, wobei die Bestimmung so erfolgt, dass die maximal zulässige Deformation der Teile nicht überschritten wird, insbesondere so weit wie möglich unterschritten wird.

5. Verfahren nach Anspruch 4, wobei
- die Teile des Regals (100) auf jene Regalkomponenten des oder der Fächer (202) beschränkt sind, in welche die Einlagerung vorgenommen werden soll oder
- die Teile des Regals jene Regalkomponenten des Feldes (200) umfasst, in welches die Einlagerung vorgenommen werden soll und/oder die Teile des Regals (100) jene Regalkomponenten der oder der Fächer (202) umfasst, welche an das oder die Fächer (202), in welches die Einlagerung vorgenommen werden soll, insbesondere seitlich angrenzen.

6. Verfahren nach einem der vorigen Ansprüche 4-5, wobei es sich bei dem Regal (100) um ein Regal (100) eines automatisierten Lagers handelt, wobei die Fächer (202) parallel zueinander angeordnete Lastenträger (104) aufweisen, wobei die Lastenträger (104) optional Führungsmittel (402) für ein Regalbediengerät (404) des Regals aufweisen, wobei die maximal zulässige Deformation eine maximal zulässige Deformation einer der Lastenträger (104) und insbesondere des Führungsmittels (402) umfasst.

7. Verfahren nach Anspruch 6, wobei die Bestimmung des zu verwendenden freien Lagerplatzes ferner die Bereitstellung einer Zusatzinformation bezüglich der Belastung des zu verwendenden Lagerplatzes umfasst, wobei basierend auf dieser Zusatzinformation das Bewegungsverhalten des Regalbediengerätes positionsabhängig gesteuert wird.

8. Verfahren nach einem der vorigen Ansprüche, wobei die Belastung der durch etwaige Ladungsträger (206) belegten Lagerplätze (204) und das Gewicht des einzulagernden Ladungsträgers (400) jeweils einer Gewichtskategorie eines Satzes von Gewichtskategorien zugeordnet sind, wobei die erste und dritte Information die Gewichtskategorie angibt und die Bestimmung des Lagerplatzes (204) auf Basis der Gewichtskategorien erfolgt.

9. Verfahren nach einem der vorigen Ansprüche, wobei im Falle dessen bei einer etwaigen Einlagerung des Ladungsträgers (400) für das oder die Fächer (202) bei jedem freien Lagerplatz (204) eine Überschreitung der Belastungsgrenze resultieren würde die Bestimmung des zur Einlagerung des Ladungsträgers (400) zu verwendenden freien Lagerplatzes (204) angibt, dass kein Lagerplatz zur Einlagerung zu verwenden ist.

10. Verfahren nach Anspruch 9, wobei im Fall dessen für das oder die Fächer (202) die Bestimmung des zur Einlagerung des Ladungsträgers (400) zu verwendenden freien Lagerplatzes (204) angibt, dass kein Lagerplatz zur Einlagerung zu verwenden ist, das Verfahren ferner die Auswahl eines oder mehrerer weiteren der Fächer (202) oder eines weiteren Feldes (200) des Regals (100) umfasst, wobei daraufhin für das oder die weitere der Fächer (202) oder des weiteren Feldes (200) und der dortigen Lagerplätze (204) die Lagerplatzbestimmung entsprechend durchgeführt wird.

11. Verfahren nach einem der vorigen Ansprüche, , wobei die Vielzahl der Zuordnungen durch einen Graphen oder eine Tabelle (410) abgebildet sind .

12. Regalsystem mit einem Regal (100) zur Einlagerung von Ladungsträgern in dem Regal (100), wobei dem Regal (100) bezüglich der Beladung mit Ladungsträgern (206) eine Belastungsgrenze gemäß einer statischen Bemessung zugeordnet ist, wobei das Regal (100) Felder (200) mit jeweils mehreren Fächern (202) aufweist und die Fächer (202) jeweils mehrere Lagerplätze (204) für Ladungsträger (206) aufweisen, wobei das Regalsystem eine Steuereinheit (406) aufweist, wobei die Steuereinheit (406) zur Durchführung einer Lagerplatzbestimmung ausgebildet ist, wobei die Lagerplatzbestimmung umfasst:
- Empfang einer ersten Information bezüglich der räumlichen Verteilung und jeweiligen Belastung durch etwaige Ladungsträger (206) belegter Lagerplätze (204) eines oder mehrerer der Fächer,
- Empfang einer zweiten Information bezüglich der räumlichen Lage eines oder mehrerer freier Lagerplätze (204) des oder der Fächer (202),
- Empfang einer dritten Information bezüglich des Gewichts des einzulagernden Ladungsträgers (400),
- Bestimmung des zur Einlagerung des Ladungsträgers (400) zu verwendenden freien Lagerplatzes (204) des oder der Fächer (202) auf Basis der ersten, zweiten und dritten Information und der Belastungsgrenze, wobei die Bestimmung so erfolgt, dass bei der Einlagerung des Ladungsträgers (400) die Belastungsgrenze nicht überschritten wird,
**dadurch gekennzeichnet, dass**
die Steuereinheit (406) für die Fächer (202) über eine Vielzahl von Zuordnungen verfügt, wobei für jede Zuordnung angegeben ist, welcher freie Lagerplatz (204) der Fächer (202) zur Einlagerung von Ladungsträgern (400) verwendbar ist in Abhängigkeit von einer Informationskombination, wobei jede Informationskombination eine individuelle Kombinationsvariante von räumlichen Verteilungen und Belastungen durch Ladungsträger (206) belegter Lagerplätze (204), der räumlichen Lage eines oder mehrerer freier Lagerplätze (204) der Fächer (202) und Gewichten von einzulagerndem Ladungsträger (206) umfasst, wobei zur Bestimmung des Lagerplatzes (204) die erste, zweite und dritte Information als eine aktuelle Informationskombination an die Steuereinheit (406) übermittelt wird und wobei als Antwort auf das Übermitteln anhand der Zuordnungen der zu dieser aktuellen Informationskombination zugeordnete und zur Einlagerung zu verwendende freie Lagerplatz (204) durch die Steuereinheit (406) bestimmt wird.

## Claims

1. A method for storing load carriers in a rack (100), wherein a load limit according to a static assessment is assigned to the rack (100) with respect to the load with load carriers, wherein the rack (100) has fields (200) each with multiple compartments (202), and the compartments (202) each have a plurality of storage locations (204) for load carriers (206), wherein the method comprises determining a storage location, wherein a control unit (406) is used to determine the storage location, wherein the determination of the storage location comprises:
- receiving a first piece of information regarding the spatial allocation and respective load of storage locations (204) of one or more of the compartments occupied by any load carriers (206),
- receiving a second piece of information regarding the spatial location of one or more free storage locations (204) of the compartment(s) (202),
- receiving a third piece of information regarding the weight of the load carrier (400) to be stored,
- determining the free storage location (204) of the compartment(s) (202) to be used for storing the load carrier (400) on the basis of the first, second, and third pieces of information and the load limit, wherein the determination is carried out such that the load limit is not exceeded by the storage of the load carrier (400),
**characterized in that**
the control unit (406) is provided with a plurality of assignments for the compartments (202), wherein each assignment specifies which free storage location (204) of the compartments (202) can be used for storing load carriers (400), depending on a combination of pieces of information, wherein each combination of pieces of information comprises an individual combination variant of spatial allocations and loads of storage locations (204) occupied by load carriers (206), the spatial location of one or more free storage locations (204) of the compartments (202) and weights of a load carrier (206) to be stored, wherein the first, second, and third pieces of information are transmitted as a current combination of pieces of information to the control unit (406) for the determination of the storage location (204), and wherein, as a response to the transmission on the basis of the assignments, the free storage location (204) to be assigned to this current combination of pieces of information and to be used for storage is determined by the control unit (406).

2. The method according to claim 1, wherein the determination of the storage location (204) is carried out such that the load limit is undershot as far as possible, or only just achieved as closely as possible.

3. The method according to any one of the preceding claims, wherein the determination of the free storage location (204) to be used for storing the load carrier (400)
- only considers the load limit of those rack components of the compartment(s) (202) in which the storage is to be carried out, or
- only considers the load limit of those rack components of the field (200) in which the storage is to be carried out and/or only considers the load limit of those rack components of the compartments (202) which are adjacent to, in particularly are laterally adjacent to, the compartment(s) (202) in which the storage is to be carried out.

4. The method according to any one of the preceding claims, wherein the determination of the storage location (204) considers any deformation of parts of the rack (100) occurring during the storage of the load carrier (400), wherein the load limit specifies a maximum permissible deformation of the parts, wherein the determination is carried out such that the maximum permissible deformation of the parts is not exceeded, in particular is undershot as far as possible.

5. The method according to claim 4, wherein
- the parts of the rack (100) are limited to those rack components of the compartment(s) (202) in which the storage is to be carried out, or
- the parts of the rack comprise those rack components of the field (200), in which the storage is to be carried out, and/or the parts of the rack (100) comprise those rack components of the compartment(s) (202), which is/are adjacent to, in particularly is/are laterally adjacent to, the compartment(s) (202), in which the storage is to be carried out.

6. The method according to any one of the preceding claims 4-5, wherein the rack (100) is a rack (100) of an automated warehouse, wherein the compartments (202) have load supports (104) arranged parallel to one another, wherein the load supports (104) optionally have guide means (402) for a storage and retrieval device (404) of the rack, wherein the maximum permissible deformation comprises a maximum permissible deformation of one of the load supports (104) and in particular of the guide means (402).

7. The method according to claim 6, wherein the determination of the free storage location to be used further comprises the provision of an additional piece of information regarding the load of the storage location to be used, wherein the movement behavior of the storage and retrieval device is controlled dependent on the position on the basis of this additional piece of information.

8. The method according to any one of the preceding claims, wherein the load of the storage locations (204) occupied by any load carriers (206) and the weight of the load carrier (400) to be stored are respectively assigned to a weight category of a set of weight categories, wherein the first and third pieces of information specify the weight category and the storage location (204) is determined on the basis of the weight categories.

9. The method according to any one of the preceding claims, wherein, in the case that any storage of the load carrier (400) would result in exceeding the load limit for the compartment(s) (202) for that free storage location (204), the determination of the free storage location (204) to be used for storing the load carrier (400) indicates that no storage location is to be used for storage.

10. The method according to claim 9, wherein, in the case that the determination of the free storage location (204) to be used for storing the load carrier (400) indicates for the compartment(s) (202) that no storage location is to be used for storage, the method may further comprise a selection of one or more other compartment(s) (202) or another field (200) of the rack (100), wherein the storage location determination is subsequently correspondingly carried out for the other compartment(s) (202) or the other field (200) and the storage locations (204) there.

11. The method according to any one of the preceding claims, wherein the plurality of assignments are mapped by a chart or a table (410).

12. A rack system with a rack (100) for storing load carriers in the rack (100), wherein a load limit according to a static assessment is assigned to the rack (100) with respect to the load with load carriers, wherein the rack (100) has fields (200) each with multiple compartments (202), and the compartments (202) each have a plurality of storage locations (204) for load carriers (206), wherein the rack system has a control unit (406), wherein the control unit (406) is configured for determining a storage location, wherein the determination of the storage location comprises:
- receiving a first piece of information regarding the spatial allocation and respective load of storage locations (204) of one or more of the compartments occupied by any load carriers (206),
- receiving a second piece of information regarding the spatial location of one or more free storage locations (204) of the compartment(s) (202),
- receiving a third piece of information regarding the weight of the load carrier (400) to be stored,
- determining the free storage location (204) of the compartment(s) (202) to be used for storing the load carrier (400) on the basis of the first, second, and third pieces of information and the load limit, wherein the determination is carried out such that the load limit is not exceeded by the storage of the load carrier (400),
**characterized in that**
the control unit (406) is provided with a plurality of assignments for the compartments (202), wherein each assignment specifies which free storage location (204) of the compartment(s) (202) can be used for storing load carriers (400), depending on a combination of pieces of information, wherein each combination of pieces of information comprises an individual combination variant of spatial allocations and loads of storage locations (204) occupied by load carriers (206), the spatial location of one or more free storage locations (204) of the compartments (202) and weights of a load carriers (206) to be stored, wherein the first, second, and third pieces of information are transmitted as a current combination of pieces of information to the control unit (406) for the determination of the storage location (204), and wherein, as a response to the transmission on the basis of the assignments, the free storage location (204) to be assigned to this current combination of pieces of information and to be used for storage is determined by the control unit (406).

## Revendications

1. Procédé de stockage de porteurs de charges dans une étagère (100), dans lequel une limite de charge en fonction d'une dimension statique est affectée à l'étagère (100) en ce qui concerne la charge avec les porteurs de charges, dans lequel l'étagère (100) présente des champs (200) avec respectivement plusieurs compartiments (202) et les compartiments (202) présentent respectivement plusieurs emplacements de stockage (204) pour des porteurs de charges (206), le procédé comprenant une détermination de l'emplacement de stockage, dans lequel, pour l'exécution de la détermination de l'emplacement de stockage, on se sert d'une unité de commande (406), dans lequel la détermination de l'emplacement de stockage comprend :
- la réception d'une première information concernant la distribution spatiale et la charge respective par des emplacements de stockage (204) d'un ou de plusieurs compartiments occupés par des porteurs de charges (206) quelconques,
- la réception d'une deuxième information concernant la position spatiale d'un ou de plusieurs emplacements de stockage (204) du ou des compartiments (202) libres,
- la réception d'une troisième information concernant le poids du porteur de charge (400) à stocker,
- la détermination de l'emplacement de stockage (204) du ou des compartiments (202) libre à employer pour le stockage du porteur de charge (400) sur la base de la première, de la deuxième et de la troisième information et de la limite de charge, où la détermination a lieu de telle manière que, lors du stockage du porteur de charge (400), la limite de charge ne soit pas dépassée,
**caractérisé en ce que**
l'unité de commande (406) dispose d'un grand nombre d'affectations pour les compartiments (202), dans lequel, pour chaque affectation, il est indiquée, quel emplacement de charge (204) des compartiments (202) peut être employé pour le stockage de porteurs de charges (400) en fonction d'une combinaison d'informations, où chaque combinaison d'informations comprend une variante de combinaison individuelle de distributions spatiales et de charges par des emplacements de charges (204) occupés par des porteurs de charges (206), de la position spatiales d'un ou de plusieurs emplacements de stockage (204) des compartiments (202) libres, et de poids de porteurs de charges (206) à stocker, où, pour la détermination de l'emplacement de stockage (204), la première, la deuxième et la troisième information sont transmises à l'unité de commande (406) en tant que combinaison d'information actuelle et où en réponse à la transmission, on détermine par l'unité de commande (406), l'emplacement de stockage (204) libre affecté à l'aide des affectations de la combinaison de cette information actuelle et à employer pour le stockage.

2. Procédé selon la revendication 1, dans lequel la détermination de l'emplacement de stockage (204) a lieu de telle manière que la limite de charge est, dans la mesure du possible, non dépassée ou est atteinte de manière aussi juste que possible.

3. Procédé selon l'une des revendications précédentes, dans lequel la détermination de l'emplacement de stockage (204) libre à employer pour le stockage du porteur de charge (400)
- ne tient compte que de la limite de charge des composants d'étagères en question du ou des compartiments (202) dans lesquels un stockage doit avoir lieu, ou
- ne tient compte que de la limite de charge des composants d'étagères en question du champ (200) dans lequel un stockage doit avoir lieu, et/ou que de la limite de charge des composants d'étagères en question des compartiments (202), lesquels délimitent en particulier latéralement le ou les compartiments (202), dans lesquels le stockage doit avoir lieu.

4. Procédé selon l'une des revendications précédentes, dans lequel la détermination de l'emplacement de stockage (204) tient compte d'éventuelles déformations de parties de l'étagère (100) se produisant lors du stockage du porteur de charge (400), où la limite de charge indique une déformation maximale permissible des parties, où la détermination a lieu de telle manière que la déformation maximale permissible des parties n'est pas dépassée, notamment, dans la mesure du possible, est évaluée en-dessous.

5. Procédé selon la revendication 4, dans lequel
- les parties de l'étagère (100) sont restreintes aux composants d'étagères en question du ou des compartiments (202) dans lesquelles le stockage doit avoir lieu, ou
- les parties de l'étagère comprennent les composants d'étagère en question du champ (200), dans lequel le stockage doit avoir lieu et/ou les parties de l'étagère (100) comprennent les composants d'étagères en question du ou des compartiments (202) lesquels sont notamment limitrophes latéralement du ou des compartiments (202) dans lesquels le stockage doit avoir lieu.

6. Procédé selon l'une des revendications 4 à 5, dans lequel, dans le cas de l'étagère (100) , il s'agit d'une étagère (100) d'un stockage automatisé, dans lequel les compartiments (202) présentent des porteurs de charges (104) disposés parallèlement les uns par rapport aux autres, dans lequel les porteurs de charges (104) présentent éventuellement des moyens de guidage (402) pour un dispositif d'actionnement d'étagères (404) de l'étagère, dans lequel la déformation maximale permissible comprend une déformation maximale permissible d'un des porteurs de charges (104) et en particulier du moyen de guidage (402).

7. Procédé selon la revendication 6, dans lequel la détermination de l'emplacement de stockage libre à employer comprend en outre la fourniture d'une information complémentaire concernant la charge de l'emplacement de stockage à employer, dans lequel, en se basant sur cette information complémentaire, on peut commander le comportement en déplacement du dispositif d'actionnement d'étagère en fonction de la position.

8. Procédé selon l'une des revendications précédentes, dans lequel la charge de l'emplacement de stockage (204) occupé par des porteurs de charges (206) quelconques et le poids du porteur de charge (400) à stocker sont affectés respectivement à une catégorie de poids d'un ensemble de catégories de poids, dans lequel la première et la troisième information indiquent la catégorie de poids et la détermination de l'emplacement de stockage (204) a lieu sur la base de la catégorie de poids.

9. Procédé selon l'une des revendications précédentes, dans lequel, dans le cas où un dépassement de la limite de charge résulterait lors d'un stockage quelconque du porteur de charge (400) pour le ou les compartiments (202) à chaque emplacement de stockage (204) libre, la détermination de l'emplacement de stockage (204) libre à employer pour le stockage du porteur de charge (400) indique qu'aucun emplacement de stockage ne peut être employé pour le stockage.

10. Procédé selon la revendication 9, dans lequel, dans le cas où la détermination de l'emplacement de stockage (204) libre à employer pour le stockage du porteur de charge (400) pour le ou les compartiments (202) indique qu'aucun emplacement de stockage ne peut être employé pour le stockage, le procédé comprend en outre la sélection d'un ou de plusieurs autres parmi les compartiments (202) ou d'un autre champ (200) de l'étagère (100), où, par la suite, on procède de manière correspondante pour la détermination de l'emplacement de stockage pour l'autre ou les autres compartiments (202) ou l'autre champ (200) et des emplacements de stockage (204) à ces endroits.

11. Procédé selon l'une des revendications précédentes, dans lequel le grand nombre d'affectations est représenté par un graphique ou un tableau (410).

12. Système d'étagères avec une étagère (100) pour le stockage de porteurs de charges dans une étagère (100), dans lequel une limite de charge en fonction d'une dimension statique est affectée à l'étagère (100) en ce qui concerne la charge avec les porteurs de charges (206), dans lequel l'étagère (100) présente des champs (200) avec respectivement plusieurs compartiments (202) et les compartiments (202) présentent respectivement plusieurs emplacements de stockage (204) pour des porteurs de charges (206), le système d'étagère comprenant une unité de commande (406), dans lequel, l'unité de commande (406) est prévue pour la détermination d'un emplacement de stockage, où la détermination de l'emplacement de stockage comprend :
- la réception d'une première information concernant la distribution spatiale et la charge respective par des emplacements de stockage (204) d'un ou de plusieurs compartiments occupés par des porteurs de charges (206) quelconques,
- la réception d'une deuxième information concernant la position spatiale d'un ou de plusieurs emplacements de stockage (204) du ou des compartiments (202) libres,
- la réception d'une troisième information concernant le poids du porteur de charge (400) à stocker,
- la détermination de l'emplacement de stockage (204) du ou des compartiments (202) libre à employer pour le stockage du porteur de charge (400) sur la base de la première, de la deuxième et de la troisième information et de la limite de charge, où la détermination a lieu de telle manière que, lors du stockage du porteur de charge (400), la limite de charge ne soit pas dépassée,
**caractérisé en ce que**
l'unité de commande (406) dispose d'un grand nombre d'affectations pour les compartiments (202), dans lequel, pour chaque affectation, il est indiquée, quel emplacement de charge (204) des compartiments (202) libre peut être employé pour le stockage de porteurs de charges (400) en fonction d'une combinaison d'informations, où chaque combinaison d'informations comprend une variante de combinaison individuelle de distributions spatiales et de charges par des emplacements de charges (204) occupés par des porteurs de charges (206), de la position spatiale d'un ou de plusieurs emplacements de stockage (204) des compartiments (202) libres, et de poids de porteurs de charges (206) à stocker, où, pour la détermination de l'emplacement de stockage (204), la première, la deuxième et la troisième information sont transmises à l'unité de commande (406) en tant que combinaison d'information actuelle et où en réponse à la transmission, on détermine par l'unité de commande (406), l'emplacement de stockage (204) libre affecté à l'aide des affectations de la combinaison de cette information actuelle et à employer pour le stockage.
